# EUROPEAN PATENT APPLICATION

(11) **EP 3 413 260 A1**
(43) Date of publication of application: **12.12.2018**
(21) Application number: 17882262.3
(22) Date of filing: 22.06.2017
(51) Int. Cl.: G06Q 40/08

(54) **METHOD AND DEVICE FOR REVOKING INSURANCE APPLICATION, INSURANCE SYSTEM, AND COMPUTER-READABLE STORAGE MEDIUM**

(30) Priority: 15.03.2017 CN 201710155657
(71) Applicant: Ping An Technology (Shenzhen) Co., Ltd., Shenzhen, Guangdong 518000 (CN)
(72) Inventor: WU, Haibo, Shenzhen City Guangdong 518000 (CN); JIANG, Yunpeng, Shenzhen City Guangdong 518000 (CN); LING, Jian, Shenzhen City Guangdong 518000 (CN); MA, Xiangdong, Shenzhen City Guangdong 518000 (CN); DING, Jie, Shenzhen City Guangdong 518000 (CN)
(74) Representative: Osterhoff, Utz
(86) International application number: PCT/CN2017/089482
(87) International publication number: WO 2018/166092

(57) **Abstract**

Disclosed is a method for cancelling an insurance policy that includes: detecting whether a preset cancellation condition of an insurance policy is satisfied when the insurance policy is under an insurance-applying status or under a to-be-underwritten status; acquiring a corresponding cancellation period of the insurance policy if the preset cancellation condition of the insurance policy is satisfied; detecting within the cancellation period whether a first change instruction is received which first change instruction is intended to change the status of the insurance policy so that the preset cancellation condition of the insurance policy is no longer satisfied; and cancelling the insurance policy when the first change instruction is not detected. Further disclosed are a device for cancelling an insurance policy, an insurance system, and a computer-readable storage media. With this disclosure, the insurance policy can be cancelled automatically when it meets the cancellation conditions. So the efficiency in cancelling an insurance policy is improved while the cost incurred by cancelling an insurance policy is reduced. Furthermore, the possible incorrect manual operations of cancelling an insurance policy can be avoided, leading to improved accuracy of cancelling insurance policies.

## Description

The present application claims priority to China Patent Application No. 201710155657.9, filed on March 15, 2017 to the State Intellectual Property Office and entitled "Method and Device for Cancelling an Insurance Policy, Insurance System, and Computer-readable Storage Medium", the entirety of which is hereby incorporated herein by reference.

### TECHNICAL FIELD

The present disclosure relates generally to the technical field of insurance, and more particularly relates to a method and a device for cancelling an insurance policy, an insurance system, and a computer-readable storage medium.

### BACKGROUND

An insurance policy may need to be cancelled when it is under insurance-applying status or under to-be-underwritten status. Existing methods of cancelling an insurance policy, however, need to be performed manually, which are inefficient and costly. If the insurance policy, after it is generated, is kept unprocessed by the insurance system, the insurance salesman will cancel the insurance policy. This not only affects the underwriting effectiveness of the insurance policy, but it would increase the cost of the insurance company if later a technician is required to recover the relevant data.

### SUMMARY

It is therefore one main object of the present disclosure to provide a method and a device for cancelling an insurance policy, an insurance system, and a computer-readable storage medium, to address the technical problems of low efficiency and high cost of existing methods of cancelling an insurance policy.

To achieve the above object, there is provided a method for cancelling an insurance policy, the method including the following operations. When an insurance policy is under the insurance-applying status or under the to-be-underwritten status, a detection is performed as to whether a preset cancellation condition of the insurance policy is satisfied. If the preset cancellation condition of the insurance policy is satisfied, then a corresponding cancellation period of the insurance policy is acquired. Then it is detected within the cancellation period whether a first change instruction is received which first change instruction changes the status of the insurance policy so that the preset cancellation condition of the insurance policy is no longer satisfied. Otherwise if the first change instruction is not detected, the insurance policy will be canceled.

To achieve the above object, there is also provided a device for cancelling an insurance policy, the device including: a detection module that detects whether a preset cancellation condition of an insurance policy is satisfied when the insurance policy is under the insurance-applying status or under the to-be-underwritten status; an acquisition module that acquires a corresponding cancellation period of the insurance policy when the preset cancellation condition of the insurance policy is satisfied, wherein the detection module further detects within the cancellation period whether a first change instruction is received which first change instruction changes the status of the insurance policy so that the preset cancellation condition of the insurance policy is no longer satisfied; and a cancellation module that cancels the insurance policy if the first change instruction is not detected.

To achieve the above object, there is further provided an insurance system that includes a memory, a processor, and an insurance policy cancellation program that is stored in the memory and executable by the processor. The processor invokes the insurance policy cancellation program stored in the memory to perform the following operations: detecting whether a preset cancellation condition of an insurance policy is satisfied when the insurance policy is under the insurance-applying status or under the to-be-underwritten status; acquiring a corresponding cancellation period of the insurance policy if the preset cancellation condition of the insurance policy is satisfied; detecting within the cancellation period whether a first change instruction is received which first change instruction changes the status of the insurance policy so that the preset cancellation condition of the insurance policy is no longer satisfied; and cancelling the insurance policy if the first change instruction is not detected.

To achieve the above-mentioned object, there is still further provided a computer-readable storage medium storing one or more programs executable by one or more processors to perform the following operations: detecting whether a preset cancellation condition of an insurance policy is satisfied when the insurance policy is under insurance-applying status or under to-be-underwritten status; acquiring a corresponding cancellation period of the insurance policy when the preset cancellation condition of the insurance policy is satisfied; detecting within the cancellation period whether a first change instruction is received which first change instruction changes the status of the insurance policy so that the preset cancellation condition of the insurance policy is no longer satisfied; and cancelling the insurance policy when the first change instruction is not detected.

In accordance with the present disclosure, when an insurance policy is under the insurance-applying status or under the to-be-underwritten status, it is detected whether a preset cancellation condition of the insurance policy is satisfied. If the preset cancellation condition of the insurance policy is satisfied, then a corresponding cancellation period of the insurance policy is acquired. Then a further detection is performed within the cancellation period to determine whether a first change instruction is received which first change instruction changes the status of the insurance policy so that the preset cancellation condition of the insurance policy is no longer satisfied. Consequently, if the first change instruction is not detected, then the insurance policy would be cancelled. Therefore, the insurance policy can be cancelled automatically when it meets the preset cancellation condition. So the efficiency of cancelling an insurance policy is improved while the cost incurred by cancelling the insurance policy is reduced. Furthermore, the possible incorrect manual operations of cancelling an insurance policy can be avoided, leading to improved accuracy of cancelling insurance policies.

### BRIEF DESCRIPTION OF THE ACCOMPANYING DRAWINGS

FIG. 1 is an illustrative flowchart of a first embodiment of a method for cancelling an insurance policy in accordance with the present disclosure.
FIG. 2 is an illustrative flowchart of a second embodiment of the method for cancelling an insurance policy in accordance with the present disclosure.
FIG. 3 is an illustrative flowchart of an embodiment in which the insurance policy is cancelled when the first change instruction is not detected in accordance with the present disclosure.
FIG. 4 is an illustrative block diagram of a first embodiment of a device for cancelling an insurance policy in accordance with the present disclosure.
FIG. 5 is an illustrative block diagram of a second embodiment of the device for cancelling an insurance policy in accordance with the present disclosure.
FIG. 6 is an illustrative block diagram of a cancellation module in accordance with the present disclosure.
FIG. 7 is a schematic diagram of a hardware operating environment of a device relevant to the technical solutions reflected in various embodiments of the present disclosure.

Various implementations, functional features, and advantages in accordance with this disclosure will now be described in further detail with reference to some illustrative embodiments and the accompanying drawings.

### DETAILED DESCRIPTION OF ILLUSTRATIVE EMBODIMENTS

It will be appreciated that the specific embodiments described herein are merely illustrative of the disclosure and are not intended to limit the disclosure.

This disclosure provides a method for cancelling an insurance policy (hereinafter also interchangeably referred to as an "insurance policy cancellation method").

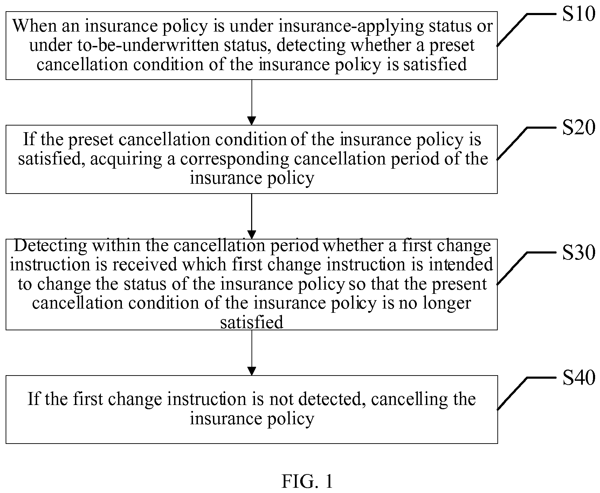

FIG. 1 is an illustrative flowchart of a first embodiment of the method for cancelling an insurance policy in accordance with this disclosure.

In this embodiment, an embodiment of a method for cancelling an insurance policy is provided. Note, although a logical sequence has been shown in the flowchart, those steps as shown or described in some cases can be performed in a different order than that shown in the flowchart.

The method for cancelling an insurance policy according to this application can be applied to a hardware environment formed by a server and a terminal. The server can be coupled to the terminal via one or more networks, including without limitation: wide area networks (WAN's), metropolitan area networks (MAN's), and local area networks (LAN's). The terminal includes without limitation: a personal computer (PC), a mobile phone, a tablet computer, and the like. The server includes without limitation: a uniprocessor server, a multiprocessor server, and an integrated server. The method for cancelling an insurance policy according to this embodiment can be performed by the insurance system, while the insurance system can be executed by the server, or it can also be executed by the terminal, or by the server and the terminal in conjunction. In some embodiments, for example, when receiving an insurance policy sent from the terminal and the insurance policy is under the insurance-applying status or to-be-underwritten status, then the server 102 can detect whether the insurance policy meets a preset cancellation condition. If the insurance policy meets the preset cancellation condition, then the server 102 can acquire a corresponding cancellation period of the insurance policy. The server 102 may further detect within the cancellation period whether a first change instruction is received from the terminal which first change instruction is intended to change the status of the insurance policy so that the preset cancellation condition of the insurance policy would no longer be satisfied. If the first change instruction is not detected, then the server 102 can cancel the insurance policy.

The method for cancelling an insurance policy includes the following blocks which begin at S10.

In S10, when an insurance policy is under insurance-applying status or under to-be-underwritten status, a detection is performed to determine whether a preset cancellation condition of the insurance policy is satisfied.

The current status of the insurance policy is detected. When the insurance policy is under the insurance-applying status or under the to-be-underwritten status, then a detection is performed to determine whether the preset cancellation condition of the insurance policy is satisfied. The insurance policy, also known as an "insurance application" or an "insurance proposal", is a written offer by which the insured or policyholder applies to the insurer for entering into an insurance contract with the insurer. The insurance application is a written document that is prepared in advance by the insurer and has a uniform format. The insured must faithfully fill in the items listed in the insurance policy one by one for the insurer to decide whether to underwrite, or to decide under what conditions or what kind of rate the underwriting is to be implemented. By applying for insurance, the insured declares his will of entering into an insurance contract with the insurer, usually by filling out an insurance application prepared in advance by the insurance company. The insurance application can be handed over to the insurer or an agent. In addition to the insurance application, the insurer may also require the insured to provide some other documents or fill out some other information. An example is a health certificate that needs to be provided for life insurance. Another example is a financial report that sometimes needs to be provided for property insurance. By underwriting, the insurer expresses his agreement to the insurance offer of the insured and would make no substantive changes to the insurance application. The insurance contract will be entered into and concluded following the underwriting of the insurer.

In this embodiment, the preset cancellation condition may be that the insurance policy has not been underwritten within a predetermined period after it is generated, such that the insurance policy would be cancelled. Alternatively, the preset cancellation condition may be that the insurance system, after receiving the request for insurance coverage, has failed to receive within a specified period the insurance policy and other information required for underwriting. It can be understood that the lengths of the predetermined period and the specified period can be set as needed. The predetermined period and the specified period may be the same; for example, both may be set to 10 days. They may also be different; for example, the preset period may be set to 10 days while the specified period to 15 days. The method then proceeds to S20.

In S20, if the preset cancellation condition of the insurance policy is satisfied, then a corresponding cancellation period of the insurance policy is acquired.

If the insurance policy meets the preset cancellation condition, then the corresponding cancellation period of the insurance policy can be acquired. In this embodiment, the cancellation period can be determined based on attribute information, the attribute information including an institution to which the insurance policy belongs, a corresponding premium of the insurance policy, whether the policyholder applies for insurance for the first time, a loss ratio of the insurance policy, and so on. It should be noted that the institution to which the insurance policy belongs refers to the region to which the insurance policy belongs, such as Shanghai Institution, Shenzhen Institution, Beijing Institution, and so on. For example, if the insurance policy belongs to the Shanghai institution, the corresponding premium of the insurance policy is more than 1 million, the policyholder applies for insurance for the first time, and the loss ratio is less than a, then the cancellation period can be set to 20 days. The unit or measurement of the cancellation period can be day, month, hour, or the like. The method then continues to blocks S30 and S40.

In S30, a detection is carried out within the cancellation period as to whether a first change instruction is received which first change instruction changes the status of the insurance policy so that the preset cancellation condition of the insurance policy is no longer satisfied.

In S40, if the first change instruction is not detected, then the insurance policy is cancelled.

When the insurance policy lies within the cancellation period, then it is detected within the cancellation period whether the first change instruction is received which first change instruction changes the status of the insurance policy so that the cancellation condition is received of the insurance policy is no longer satisfied. When the first change instruction is not detected within the cancellation period that is intended to change the status of the insurance policy to make the preset cancellation condition of the insurance policy no longer satisfied, then the insurance policy would be cancelled. If within the cancellation period the first change instruction is detected that changes the status of the insurance policy so that the preset cancellation condition of the insurance policy is no longer satisfied, then the status of the insurance policy after it is changed will be maintained to facilitate the performance of the subsequent underwriting operation.

In addition, the method for cancelling an insurance policy may further include the following block a.

In block a, a notification message that the insurance policy has been cancelled is sent to a terminal held by the policyholder, in order to notify the policyholder that the insurance policy has been cancelled.

After the insurance policy has been cancelled, a notice of cancellation of the insurance policy is sent to the terminal held by the policyholder so that the policyholder can be informed that the insurance policy has been cancelled. It can be understood that the notification message can be sent in the form of text messages or emails. The terminal held by the policyholder can be a mobile phone, a handheld computer, or a personal computer.

In accordance with this embodiment, when the insurance policy is under the insurance-applying status or under the to-be-underwritten status, it is detected whether the preset cancellation condition of the insurance policy is satisfied. If the preset cancellation condition of the insurance policy is satisfied, then the corresponding cancellation period of the insurance policy is acquired. Then if no first change instruction intended to change the current status of the insurance policy to make the preset cancellation condition of the insurance policy no longer satisfied is detected within the cancellation period, then the insurance policy will be cancelled. Therefore, the insurance policy can be cancelled automatically when it meets the preset cancellation condition. So the efficiency in cancelling an insurance policy is improved while the cost incurred by cancelling an insurance policy is reduced. Furthermore, the possible incorrect manual operations of cancelling an insurance policy can be avoided, leading to improved accuracy of cancelling insurance policies.

There is further provided a second embodiment of the method for cancelling an insurance policy in accordance with the present disclosure.

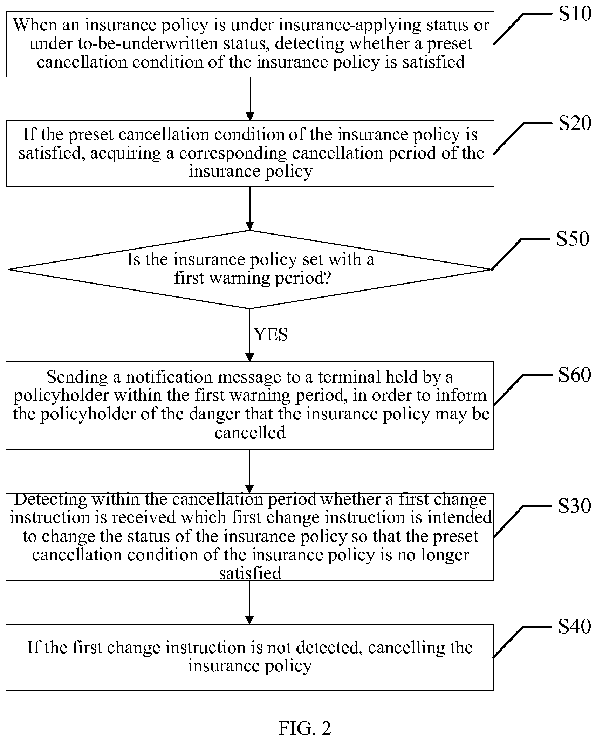

The second embodiment of the insurance policy cancellation method is different from the first embodiment of the insurance policy cancellation method in that the method according to the second embodiment further includes the following blocks S50 and S60, as illustrated in FIG. 2.

In S50, it is determined whether the insurance policy is set with a first warning period.

After determining the preset cancellation condition of the insurance policy is satisfied, it is further determined whether the insurance policy is set with a first warning period. It should be noted that, the first warning period can be set according to specific needs, but the first period time as set should be less than or equal to the cancellation period, and the cancellation period includes the first warning period, namely, the first warning period is contained within the cancellation period. For example, when the cancellation period is 20 days, the first warning period can be set to 8 days. It will be appreciated that the units or measurements of the first warning period and of the cancellation period may be the same or different.

In this embodiment, the first warning periods of different types of insurance policies as well as the sizes of these first warning periods can be set in advance in the insurance system. If the first warning period of a certain type of insurance policy is zero, then this insurance policy will be considered as provided with no first warning period. For example, the first warning period of an insurance policy for health insurance may be set to 15 days, while the first warning period of an insurance policy for agriculture insurance can be set to 10 days, and so on. Further, in the same type of insurance policies, the first warning period may also be set based on attribute information, such as the amount of the corresponding premium of the insurance policy, whether the policyholder applies for insurance for the first time, the level of the loss ratio, or the like. For example, the first warning period of an insurance policy with a relatively high premium and a relatively low loss ratio can be set relatively longer, while the first warning period of an insurance policy with a relatively how premium and a relatively high loss ratio can be set shorter to a certain extent.

In S60, if the insurance policy is set with the first warning period, then a notification message is sent to the terminal held by the policyholder within the first warning period, in order to inform the policyholder of the danger that the insurance policy may be cancelled.

When the insurance policy is configured with a first warning period, a notification message can be sent to the terminal held by the policyholder within the first warning period, in order to notify the policyholder of the danger that the insurance policy might be cancelled. For example, when the cancellation period is 20 days and the first warning period is 8 days, then after 12 days has been past so that the first warning period is entered, a notification message can be sent to the terminal held by the policyholder in order to inform the policyholder of the danger that the insurance policy might be cancelled. It should be noted that, the notification message can be sent to the policyholder by text messages and/or mails.

In addition, the method for cancelling an insurance policy may further include the following blocks b and c.

In block b, if the insurance policy is set with no first warning period, then a determination is performed as to whether an institution corresponding to the insurance policy is provided with a second warning period.

In block c, if the corresponding institution of the insurance policy is provided with the second warning period, then a notification message is sent to the terminal held by the policyholder within the second warning period, in order to inform the policyholder of the danger that the insurance policy may be cancelled.

When the insurance policy is provided with no first warning period, then it is determined whether the institution corresponding to the insurance policy is configured with a second warning period. It can be understood that the second warning period should be less than or equal to the cancellation period, and that the cancellation period includes the second warning period. The sizes of the first warning period and of the second warning period can be the same or different. The second warning periods for different institutions can be the same or different.

When the insurance policy sets no first warning period but the corresponding institution of the insurance policy is configured with a second warning period, then a notification message can be sent to the terminal held by the policyholder within the second warning period, in order to inform the policyholder of the danger that this insurance policy might be cancelled. When the insurance policy sets no first warning period and neither is the corresponding institution of the insurance policy configured with a second warning period, then no notification message will be sent to the terminal held by the policyholder.

When the insurance policy sets the first warning period while the corresponding institution of the insurance policy also sets the second warning period, then the sizes of the first warning period and of the second warning period can be compared with each other. If the second warning period is greater than the first warning period, then a notification message can be sent to the terminal held by the policyholder within the second warning period. Otherwise if the first warning period is greater than the second warning period, a notification message can be sent to the terminal held by the policyholder within the first warning period. Alternatively, when the insurance policy sets the first warning period while the corresponding institution of the insurance policy also sets the second warning period, then a notification message may be sent to the terminal held by the policyholder within the first warning period by default; or a notification message may be sent to the terminal held by the policyholder within the second warning period by default.

It should be noted that, in various embodiments of the present disclosure, the corresponding institution of the insurance policy refers to the site where the insurance policy is generated, such as Shanghai, Beijing, Changsha, Shenzhen, and so on.

Further, a default warning period may be set. The default warning period may be set according to specific needs; for example, it may be set to 3 days, 5 days, or the like. When the insurance policy sets no first warning period and neither is the corresponding institution of the insurance policy configured with a second warning period, then a notification message can be sent to the terminal held by the policyholder within the default warning period, in order to inform the policyholder of the danger that this insurance policy might be cancelled.

In accordance with this embodiment, when the insurance policy is set with warning periods, then a notification message can be sent to the corresponding policyholder of the insurance policy within the warning periods, so that he policyholder can be notified of the danger that the insurance policy might be cancelled, avoiding unnecessary cancellation of the insurance policy. Thus, the situation in which an insurance policy is cancelled and then needs to be repeatedly generated can be prevented from happening. This reduces the labor costs of insurance companies and improves the underwriting effectiveness of the insurance policy.

There is further provided a third embodiment of the method for cancelling an insurance policy in accordance with the present disclosure.

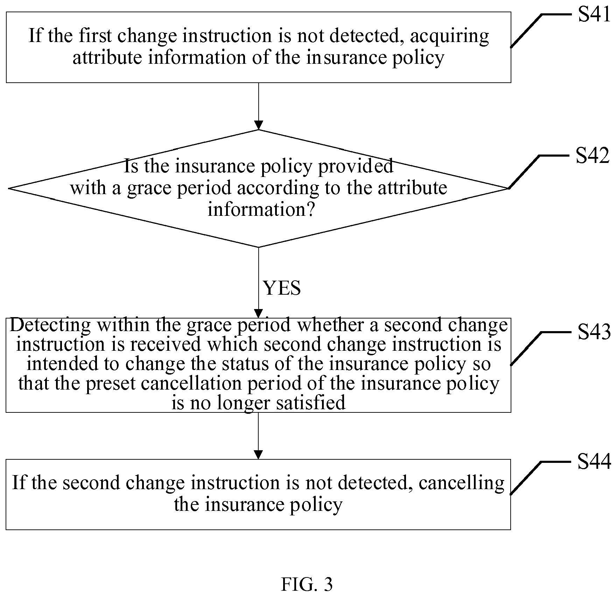

The third embodiment of the insurance policy cancellation method is different from the first embodiment of the insurance policy cancellation method in that the block S40 is subdivided into the following blocks S41 to S44, as illustrated in FIG. 3.

In S41, if no first change instruction is detected, then the attribute information of the insurance policy is acquired.

In S42, the attribute information is based on to determine whether the insurance policy is provided with a grace period.

When the first change instruction is not detected, then the attribute information of the insurance policy is acquired and further based on to determine whether the insurance policy has a grace period. The attribute information of the insurance policy includes without limitation: an institution to which the insurance policy belongs, a corresponding premium of the insurance policy, whether the policyholder applies for insurance for the first time, and a loss ratio of the insurance policy. It should be noted that the cancellation period does not include the grace period, and the grace period is subsequent to the cancellation period. The grace periods of insurance policies having different attributes may be set in advance in the insurance system. For example, the grace period of an insurance policy which belongs to Shanghai institution may be set to 5 days, the grace period of that belonging to Wuhan institution may be set to 3 days, the grace period of that belonging to Ganzhou institution may be set to 0 days, and so on. Or, the grace period of an insurance policy with a premium greater than A can be set to 7 days, the grace period of an insurance policy with a premium less than or equal to A and greater than B can be set to 5 days, the corresponding grace period of an insurance policy with a premium less than or equal to B and greater than C can be set to 3 days, while the grace period of an insurance policy with a premium less than or equal to C can be set to 0 days, and so on, where A>B>C>D and A, B, C, and D are all positive numbers greater than zero.

When multiple attributes of an insurance policy each correspond to one grace period, then the grace period with the largest value can be selected from among all the grace periods as the final grace period. Alternatively, all the grace periods may be added together and the result obtained by adding the grace periods can be taken as the final grace period. As a further alternative, a few grace periods can be selected from among all the grace periods and added together to obtain a sum total which can be taken as the final grace period. Further, when the final grace period is greater than a preset value, then the preset may be selected as the grace period, where the preset value may be set according to specific needs; it may be set to, e.g., 10 days or 15 days.

In S43, if the insurance policy is provided with the grace period, then a detection is performed within the grace period as to whether a second change instruction is received which second change instruction changes the status of the insurance policy so that the preset cancellation condition of the insurance policy is no longer satisfied.

In S44, if the first change instruction is not detected, then the insurance policy is cancelled.

When the insurance policy has been provided with the grace period, it is detected within the grace period whether a second change instruction is received which second change instruction is intended to change the status of the insurance policy so that the preset cancellation condition of the insurance policy is no longer satisfied. If within the grace period no second change instruction is received which second change instruction is intended to change the status of the insurance policy so that the preset cancellation condition of the insurance policy is no longer satisfied, then the insurance policy would be cancelled. Otherwise if within the grace period the second change instruction is received which second change instruction changes the status of the insurance policy to make the preset cancellation condition of the insurance policy no longer satisfied, then the status of the insurance policy after it is changed would be maintained to facilitate the performance of the subsequent underwriting operation.

In accordance with this embodiment, the attribute information of the insurance policy is based on to determine whether there exists a grace period. When the insurance policy has a grace period, then the insurance policy would be cancelled only when no change instructions intended to change the current status of the insurance policy to make the preset cancellation condition of the insurance policy no longer met have been detected within both the cancellation period and the grace period. Thus, unnecessary cancellation of the insurance policy can be avoided, and the situation in which an insurance policy is cancelled and then needs to be repeatedly generated can be prevented from happening. This reduces the labor costs of insurance companies and improves the underwriting effectiveness of the insurance policy.

It will be appreciated by those having ordinary skill in the art that all or part of the steps of the embodiments described supra can be performed by means of hardware, or can also be performed by instructing the relevant hardware through programs. The programs can be stored in a computer-readable storage medium. The storage medium may include a read-only memory (ROM), a magnetic disk, an optical disc, etc.

The present disclosure further provides a device for cancelling an insurance policy (hereinafter also interchangeably referred to an "insurance policy cancellation device").

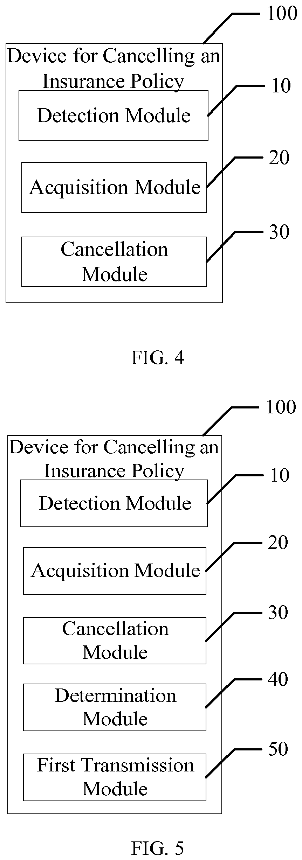

FIG. 4 is an illustrative block diagram of a first embodiment of a device for cancelling an insurance policy in accordance with the present disclosure.

It should be emphasized that, for those having skill in the art, the block diagram shown in FIG. 4 is merely an illustrative diagram of an exemplary embodiment and that those having skill in the art can easily add new modules revolving the functional modules of the device 100 for cancelling an insurance policy illustrated in FIG. 4. Names of the various modules are custom names which are merely intended to facilitate the understanding of various program functional blocks of the insurance policy cancellation device 100, and are not intended to limit the technical solution of the present disclosure. At the heart of the technical solution according to this disclosure are the functions accomplished by various functional modules having custom names.

In this embodiment, the device 100 for cancelling an insurance policy includes a detection module 10, an acquisition module 20, and a cancellation module 30.

The detection module 10 can be configured to detect whether a preset cancellation condition of an insurance policy is satisfied when the insurance policy is under insurance-applying status or under to-be-underwritten status.

The detection module 10 detects the current status of the insurance policy. When the insurance policy is under the insurance-applying status or under the to-be-underwritten status, the detection module 10 performs a detection as to whether the preset cancellation condition of the insurance policy is satisfied. The insurance policy, also known as an "insurance application" or an "insurance proposal", is a written offer by which the insured or policyholder applies to the insurer for entering into an insurance contract with the insurer. The insurance application is a written document that is prepared in advance by the insurer and has a uniform format. The insured must faithfully fill in the items listed in the insurance policy one by one for the insurer to decide whether to underwrite, or decide under what conditions or what kind of rate the underwriting is to be implemented. By applying for insurance, the insured declares his will of entering into an insurance contract with the insurer, usually by filling out an insurance application prepared in advance by the insurance company. The insurance application can be handed over to the insurer or an agent. In addition to the insurance application, the insurer may also require the insured to provide some other documents or fill out some other information. An example is a health certificate that needs to be provided for life insurance. Another example is a financial report that sometimes needs to be provided for property insurance. By underwriting, the insurer expresses his agreement to the insurance offer of the insured and would make no substantive changes to the insurance application. The insurance contract will be entered into and concluded following the underwriting of the insurer.

In this embodiment, the preset cancellation condition may be that the insurance policy has not been underwritten within a predetermined period after it is generated, such that the insurance policy would be cancelled. Alternatively, the preset cancellation condition may be that the insurance system, after receiving the request for insurance coverage, has failed to receive within a specified period the insurance policy and other information required for underwriting. It can be understood that the lengths of the predetermined period and the specified period can be set as needed. The predetermined period and the specified period may be the same; for example, both may be set to 10 days. They may also be different; for example, the preset period may be set to 10 days while the specified period to 15 days.

The acquisition module 20 can be configured to acquire a corresponding cancellation period of the insurance policy when the preset cancellation condition of the insurance policy is satisfied.

If the insurance policy meets the preset cancellation condition, then the acquisition module 20 would acquire the corresponding cancellation period of the insurance policy. In this embodiment, the cancellation period can be determined based on attribute information, the attribute information including an institution to which the insurance policy belongs, a corresponding premium of the insurance policy, whether the policyholder applies for insurance for the first time, a loss ratio of the insurance policy, and so on. It should be noted that the institution to which the insurance policy belongs refers to the region to which the insurance policy belongs, such as Shanghai Institution, Shenzhen Institution, Beijing Institution, and so on. For example, if the insurance policy belongs to the Shanghai institution, the corresponding premium of the insurance policy is more than 1 million, the policyholder applies for insurance for the first time, and the loss ratio is less than a, then the cancellation period can be set to 20 days. The unit or measurement of the cancellation period can be day, month, hour, or the like.

The detection module 10 can further be configured to detect within the cancellation period whether a first change instruction is received which first change instruction changes the status of the insurance policy so that the preset cancellation condition of the insurance policy is no longer satisfied.

The cancellation module 30 can be configured to cancel the insurance policy if the first change instruction is not detected.

When the insurance policy lies within the cancellation period, the detection module 10 may detect within the cancellation period whether the first change instruction is received which first change instruction changes the status of the insurance policy so that the cancellation condition of the insurance policy is no longer satisfied. When the detection module 10 detects no first change instruction within the cancellation period that is intended to change the status of the insurance policy to make the preset cancellation condition of the insurance policy no longer satisfied, then the cancellation module 30 would cancel this insurance policy. If within the cancellation period the cancellation module 30 has detected the first change instruction intended to change the status of the insurance policy to make the preset cancellation condition of the insurance policy no longer satisfied, then the status of the insurance policy after it is changed can be maintained to facilitate the performance of the subsequent underwriting operation.

In addition, the device for cancelling an insurance policy may further include a second transmission module configured to send a notification message that the insurance policy has been cancelled to a terminal held by the insured, in order to notify the insured that the insurance policy has been cancelled.

After the insurance policy has been cancelled, the second transmission module would sent a notice of cancellation of the insurance policy to the terminal held by the policyholder so that the policyholder can be informed that the insurance policy has been cancelled. It can be understood that the notification message can be sent in the form of text messages or emails. The terminal held by the policyholder can be a mobile phone, a handheld computer, or a personal computer.

In accordance with this embodiment, when the insurance policy is under the insurance-applying status or under the to-be-underwritten status, it is detected whether the preset cancellation condition of the insurance policy is satisfied. If the preset cancellation condition of the insurance policy is satisfied, then the corresponding cancellation period of the insurance policy is acquired. Then if no first change instruction is detected within the cancellation period which first change instruction is intended to change the current status of the insurance policy to make the preset cancellation condition of the insurance policy no longer satisfied, the insurance policy will be cancelled. Therefore, the insurance policy can be cancelled automatically when it meets the cancellation conditions. So the efficiency in cancelling an insurance policy is improved while the cost incurred by cancelling an insurance policy is reduced. Furthermore, the possible incorrect manual operations of cancelling an insurance policy can be avoided, leading to improved accuracy of cancelling insurance policies.

There is further provided a second embodiment of the device 100 for cancelling an insurance policy in accordance with the present disclosure.

The second embodiment of the device 100 for cancelling an insurance policy is different from the first embodiment of the device 100 for cancelling an insurance policy in that the device 100 according to the second embodiment further includes a determination module 40 and a first transmission module 50, as illustrated in FIG. 5.

The determination module 40 can be configured to determine whether the insurance policy is set with a first warning period.

After determining the preset cancellation condition of the insurance policy is satisfied, the determination module 40 would further determine whether the insurance policy is set with a first warning period. It should be noted that, the first warning period can be set according to specific needs, but the first warning period as set should be less than or equal to the cancellation period, and the cancellation period includes the first warning period, namely, the first warning period is contained within the cancellation period. For example, when the cancellation period is 20 days, the first warning period can be set to 8 days. It can be understood that the units or measurements of the first warning period and of the cancellation period may be the same or different.

In this embodiment, the first warning periods of different types of insurance policies as well as the sizes of these first warning periods can be set in advance in the insurance system. If the first warning period of a certain type of insurance policy is zero, then this insurance policy will be considered as provided with no first warning period. For example, the first warning period of an insurance policy for health insurance may be set to 15 days, while the first warning period of an insurance policy for agriculture insurance can be set to 10 days, and so on. Further, in the same type of insurance policies, the first warning period may also be set based on attribute information such as the amount of the corresponding premium of the insurance policy, whether the policyholder applies for insurance for the first time, the level of the loss ratio, or the like. For example, the first warning period of an insurance policy with a relatively high premium and a relatively low loss ratio can be set relatively longer, while the first warning period of an insurance policy with a relatively how premium and a relatively high loss ratio can be set shorter to a certain extent.

The first transmission module 50 can be configured to send a notification message to the terminal held by the policyholder within the first warning period if the insurance policy is set with the first warning period, in order to inform the policyholder of the danger that the insurance policy may be cancelled.

When the insurance policy is configured with a first warning period, the first transmission module 50 can send a notification message to the terminal held by the policyholder within the first warning period, in order to notify the policyholder of the danger that the insurance policy might be cancelled. For example, when the cancellation period is 20 days and the first warning period is 8 days, then after 12 days has been past so that the first warning period is entered, the first transmission module 50 would send a notification message to the terminal held by the policyholder in order to inform the policyholder of the danger that the insurance policy might be cancelled. It should be noted that, the notification message can be sent to the policyholder by text messages and/or mails.

The determination module 40 can further be configured to determine whether an institution corresponding to the insurance policy is provided with a second warning period if the insurance policy is provided with no first warning period.

The first transmission module 50 can be configured to send a notification message to the terminal held by the policyholder within the second warning period if the corresponding institution of the insurance policy is provided with the second warning period, in order to inform the policyholder of the danger that the insurance policy may be cancelled.

When the insurance policy is provided with no first warning period, then the determination module 40 determines whether the institution corresponding to the insurance policy is configured with a second warning period. It can be understood that the second warning period should be less than or equal to the cancellation period, and that the cancellation period includes the second warning period. The sizes of the first warning period and of the second warning period can be the same or different. The second warning periods for different institutions can be the same or different.

When the insurance policy sets no first warning period but the corresponding institution of the insurance policy is configured with a second warning period, then the first transmission module 50 may send a notification message to the terminal held by the policyholder within the second warning period, in order to inform the policyholder of the danger that this insurance policy might be cancelled. When the insurance policy sets no first warning period and neither is the corresponding institution of the insurance policy configured with a second warning period, then no notification message will be sent to the terminal held by the policyholder.

When the insurance policy sets the first warning period while the corresponding institution of the insurance policy also sets the second warning period, then the determination module 40 can compare the sizes of the first warning period and of the second warning period with each other. When the second warning period is greater than the first warning period, then the first transmission module 50 would send a notification message to the terminal held by the policyholder within the second warning period. Otherwise when the first warning period is greater than the second warning period, the first transmission module 50 can send a notification message to the terminal held by the policyholder within the first warning period. Alternatively, when the insurance policy sets the first warning period while the corresponding institution of the insurance policy also sets the second warning period, then the first transmission module 50 would send a notification message to the terminal held by the policyholder within the first warning period by default; or the first transmission module 50 would send a notification message to the terminal held by the policyholder within the second warning period by default.

It should be noted that, in various embodiments of the present disclosure, the corresponding institution of the insurance policy refers to the site where the insurance policy is generated, such as Shanghai, Beijing, Changsha, Shenzhen, and so on.

Further, a default warning period can be set. The default warning period may be set according to specific needs, and may be set to, for example, 3 days, 5 days, or the like. When the insurance policy sets no first warning period and neither is the corresponding institution of the insurance policy configured with a second warning period, then the first transmission module 50 may send a notification message to the terminal held by the policyholder within the default warning period, in order to inform the policyholder of the danger that this insurance policy might be cancelled.

In accordance with this embodiment, when the insurance policy is set with warning periods, then a notification message can be sent to the corresponding policyholder of the insurance policy within the warning periods, so that he policyholder can be notified of the danger that the insurance policy might be cancelled, avoiding unnecessary cancellation of the insurance policy. Thus, the situation in which an insurance policy is cancelled and then needs to be repeatedly generated can be prevented from happening. This reduces the labor costs of insurance companies and improves the underwriting effectiveness of the insurance policy.

There is further provided a third embodiment of the device 100 for cancelling an insurance policy in accordance with the present disclosure.

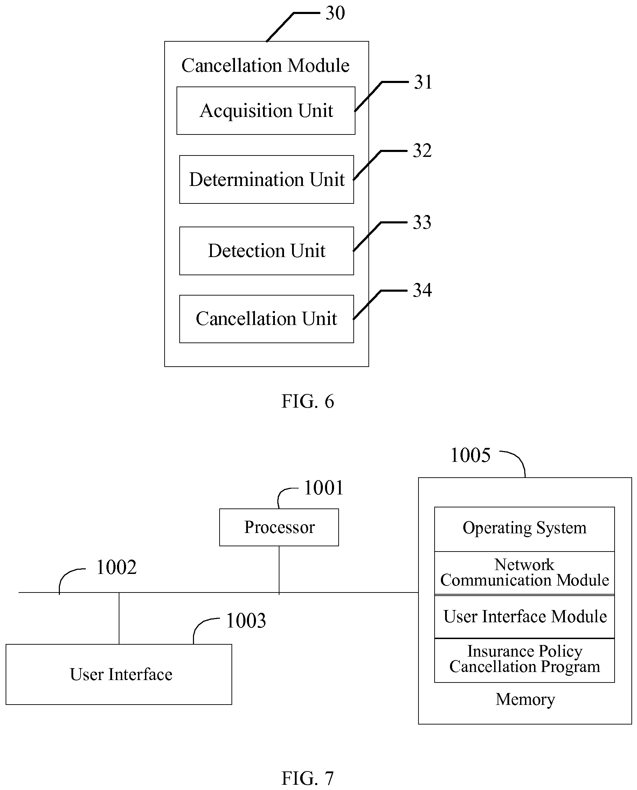

The third embodiment of the device 100 for cancelling an insurance policy is different from the first embodiment of the device 100 for cancelling an insurance policy in that the cancellation module 30 is subdivided into an acquisition unit 31, a determination unit 32, a detection unit 33, and a cancellation unit 34, as illustrated in FIG. 6.

The acquisition unit 31 can be configured to acquire the attribute information of the insurance policy, if the first change instruction is not detected.

The determination unit 32 can be configured to determine whether the insurance policy is provided with a grace period based on the attribute information.

When the first change instruction is not detected, the acquisition unit 31 acquires the attribute information of the insurance policy, and then the determination unit 32 further determines whether the insurance policy has a grace period based on the acquired attribute information. The attribute information of the insurance policy includes without limitation: an institution to which the insurance policy belongs, a corresponding premium of the insurance policy, whether the policyholder applies for insurance for the first time, and a loss ratio of the insurance policy. It should be noted that the cancellation period does not include the grace period, and the grace period is subsequent to the cancellation period. The grace periods of insurance policies having different attributes can be set in advance in the insurance system. For example, the grace period of an insurance policy belonging to Shanghai institution may be set to 5 days, the grace period of that belonging to Wuhan institution may be set to 3 days, the grace period of that belonging to Ganzhou institution may be set to 0 days, and so on. Or, the grace period of an insurance policy with a premium greater than A can be set to 7 days, the grace period of an insurance policy with a premium less than or equal to A and greater than B can be set to 5 days, the corresponding grace period of an insurance policy with a premium less than or equal to B and greater than C can be set to 3 days, while the grace period of an insurance policy with a premium less than or equal to C can be set to 0 days, and so on, where A>B>C>D and A, B, C, and D are all positive numbers greater than zero.

When multiple attributes of an insurance policy each correspond to one grace period, then the grace period with the largest value can be selected from among all the grace periods as the final grace period. Alternatively, all the grace periods may be added together and the result obtained by adding the grace periods can be taken as the final grace period. As a further alternative, a few grace periods can be selected from among all the grace periods and added together to obtain a sum total which can be taken as the final grace period. Further, when the final grace period is greater than a preset value, then the preset may be selected as the grace period, where the preset value may be set according to specific needs; it may be set to, e.g., 10 days or 15 days.

The detection unit 33 can be configured to detect within the grace period, if the insurance policy is provided with the grace period, whether a second change instruction is received which second change instruction changes the status of the insurance policy so that the preset cancellation condition of the insurance policy is no longer satisfied.

The cancellation unit 34 can be configured to cancel the insurance policy if no second change instruction is detected.

When the insurance policy has the grace period and the first change instruction is not detected, then the detection unit 33 would detect within the grace period whether a second change instruction is received which second change instruction is intended to change the status of the insurance policy so that the preset cancellation conditions of the insurance policy is no longer satisfied. If the detection unit 33 detects no second change instruction intended to change the status of the insurance policy so that the preset cancellation condition is no longer satisfied within the grace period, then the cancellation unit 34 would cancel the insurance policy. Otherwise if the detection unit 33 detects the second change instruction that changes the status of the insurance policy to make the preset cancellation condition of the insurance policy no longer met within the grace period, then the status of the insurance policy after it is changed would be maintained to facilitate the performance of the subsequent underwriting operation.

In accordance with this embodiment the attribute information of the insurance policy is based on to determine whether there exists a grace period. When the insurance policy has a grace period, then the insurance policy would be cancelled only when no change instructions intended to change the current status of the insurance policy to make the preset cancellation condition of the insurance policy no longer met have been detected within both the cancellation period and the grace period. Thus, unnecessary cancellation of the insurance policy can be avoided, and the situation in which an insurance policy is cancelled and later needs to be repeatedly generated can be prevented from happening. This reduces the labor costs of insurance companies and improves the underwriting effectiveness of the insurance policy.

It should be noted that, in terms of hardware implementation, the detection module 10, the acquisition module 20, the cancellation module 30, the determination module 40, the first transmission module 50 and the like described supra may in the form of hardware be embedded in or independent of the insurance policy cancellation device 100, or may also be stored in the form of software in a memory of the insurance policy cancellation device 100 to be invoked by the processor to perform the respective operations of the various modules described supra. The processor may be a central processing unit (CPU), a microprocessor, a microcontroller, or the like.

FIG. 7 is a schematic diagram of a hardware operating environment relevant to the technical solutions reflected in various embodiments of the present disclosure.

This embodiment provides an insurance system that can be used to implement the method for cancelling an insurance policy according to the present disclosure. The insurance system can be executed by a server, or it can also be executed by a terminal, or by the server and the terminal in conjunction.

As illustrated in FIG. 7, the insurance system may include a processor 1001 such as a CPU, a user interface 1003, a memory 1005, and a communications bus 1002. The communications bus 1002 is used to facilitate the connections and communication between these components. The user interface 1003 may include a display, an input unit such as a keyboard, and optionally may further include a standard wired or wireless interface. The memory 1005 may be a high-speed RAM memory or a non-volatile memory such as a disk memory. The memory 1005 may optionally also be a storage device that is independent of the aforementioned processor 1001.

Optionally, the insurance system may further include a camera, an RF (Radio Frequency) circuitry, a sensor, an audio circuitry, a Wi-Fi module, and the like. In this embodiment, the camera can be used to acquire a picture to be checked.

Those having skill in the art will appreciate that, the insurance system construction as illustrated in FIG. 4 constitutes no limitations to the insurance system; more or fewer components than shown may be included, or some components may be combined, or different component arrangements may be employed.

As illustrated in FIG. 7, as a type of computer storage medium, the memory 1005 can contain an operating system, a network communication module, a user interface module, and an insurance policy cancellation program. In the insurance system illustrated in FIG. 7, the user interface 1003 is mainly used for connecting a client and performing data communication with the client. For example, when the user triggers the first change instruction in the client, the client would send the first change instruction to the insurance system so that the insurance system can detect the first change instruction. The processor 1001 can be configured to invoke the insurance policy cancellation program stored in the memory 1005 to perform the following operations: detecting whether a preset cancellation condition of an insurance policy is satisfied when the insurance policy is under insurance-applying status or under to-be-underwritten status; acquiring a corresponding cancellation period of the insurance policy when the preset cancellation condition of the insurance policy is satisfied; detecting within the cancellation period whether a first change instruction is received which first change instruction changes the status of the insurance policy so that the preset cancellation condition of the insurance policy is no longer satisfied; and cancelling the insurance policy when the first change instruction is not detected.

The processor 1001 may further be configured to invoke the insurance policy cancellation program stored in the memory 1005 to perform the following operations, prior to cancelling the insurance policy when the first change instruction is not detected: determining whether the insurance policy is set with a first warning period; if the insurance policy is set with the first warning period, sending a notification message to a terminal held by a policyholder within the first warning period, in order to inform the policyholder of the danger that the insurance policy may be cancelled.

The processor 1001 may further be configured to invoke the insurance policy cancellation program stored in the memory 1005 to perform the following operations, subsequent to determining whether the insurance policy is set with the first warning period: if the insurance policy is set with no first warning period, determining whether an institution corresponding to the insurance policy is set with a second warning period; and if the corresponding institution of the insurance policy is set with the second warning period, sending a notification message to the terminal held by the policyholder within the second warning period, in order to inform the policyholder of the danger that the insurance policy may be cancelled.

Cancelling the insurance policy when the first change instruction is not detected includes: if no first change instruction is detected, acquiring attribute information of the insurance policy; determining whether the insurance policy is provided with a grace period based on the attribute information; if the insurance policy is provided with the grace period, detecting within the grace period whether a second change instruction is received which second change instruction changes the status of the insurance policy so that the preset cancellation condition of the insurance policy is no longer satisfied; otherwise if no second change instruction is detected, cancelling the insurance policy.

The processor 1001 may further be configured to invoke the insurance policy cancellation program stored in the memory 1005 to perform the following operations, subsequent to cancelling the insurance policy when the first change instruction is not detected: sending a notification message that the insurance policy has been cancelled to a terminal held by the policyholder, in order to notify the policyholder that the insurance policy has been cancelled.

The various embodiments of the insurance system in accordance with the present disclosure are essentially the same as the corresponding embodiments of the method and device for cancelling an insurance policy, and so they are not to be detailed again.

Still the present disclosure further provides a computer-readable storage medium storing one or more programs executable by one or more processors to perform the following operations: detecting whether a preset cancellation condition of an insurance policy is satisfied when the insurance policy is under insurance-applying status or under to-be-underwritten status; acquiring a corresponding cancellation period of the insurance policy when the preset cancellation condition of the insurance policy is satisfied; detecting within the cancellation period whether a first change instruction is received which first change instruction changes the status of the insurance policy so that the preset cancellation condition of the insurance policy is no longer satisfied; and cancelling the insurance policy when the first change instruction is not detected.

Further, the one or more programs can be executed by the one or more processors to perform the following operations, prior to cancelling the insurance policy if no first change instruction is detected: determining whether the insurance policy is set with a first warning period; and if the insurance policy is set with the first warning period, sending a notification message to a terminal held by a policyholder within the first warning period, in order to inform the policyholder of the danger that the insurance policy may be cancelled.

Further, the one or more programs can be executed by the one or more processors to perform the following operations, subsequent to determining whether the insurance policy is set with the first warning period: if the insurance policy is set with no first warning period, determining whether an institution corresponding to the insurance policy is set with a second warning period; and if the corresponding institution of the insurance policy is set with the second warning period, sending a notification message to the terminal held by the policyholder within the second warning period, in order to inform the policyholder of the danger that the insurance policy may be cancelled.

Cancelling the insurance policy if no first change instruction is detected includes: if no first change instruction is detected, acquiring attribute information of the insurance policy; determining whether the insurance policy is provided with a grace period based on the attribute information; if the insurance policy is provided with the grace period, detecting within the grace period whether a second change instruction is received which second change instruction is intended to change the status of the insurance policy so that the preset cancellation condition of the insurance policy is no longer satisfied; otherwise if no second change instruction is detected, cancelling the insurance policy.

Further, the one or more programs can be executed by the one or more processors to perform the following operations, subsequent to cancelling the insurance policy if no first change instruction is detected: sending a notification message that the insurance policy has been cancelled to a terminal held by the insured, in order to notify the insured that the insurance policy has been cancelled.

The various embodiments of the computer-readable storage medium in accordance with the present disclosure are essentially the same as the corresponding embodiments of the method and device for cancelling an insurance policy, and so they are not to be detailed again.

It should be noted that, as used herein, the terms "including," "comprising," or any other variations thereof are intended to cover a non-exclusive inclusion such that a process, method, article, or apparatus that includes a series of elements includes not only those elements, but other elements as well that have not expressly listed or further includes elements inherent to such processes, methods, articles, or apparatuses. Without further limitations, an element modified by the phrase "including a ..." does not exclude the existence of additional identical elements in the process, method, article, or apparatus that includes this element.

Sequence numbers of the foregoing embodiments according to the present disclosure are for illustration purposes only and are not intended to indicate the advantages and disadvantages of these embodiments.

Through the foregoing description of the embodiments, those having skill in the art can clearly understand that the method embodiments described supra can be implemented by means of software plus a necessary universal hardware platform. Of course, they can also be implemented by hardware, but in many cases, the former will be more favorable. Based on such an understanding, the essential technical solution according to the disclosure, or the portion that contributes to the prior art may be embodied as software products. Computer software products can be stored in a storage medium (e.g., a ROM/RAM, a magnetic disk, or an optical disc) and can include multiple instructions that when executed cause a terminal device (e.g., a mobile phone, a computer, a server, an air conditioner, or a network device) to perform the methods as described supra in various embodiments.

The foregoing merely portrays some illustrative embodiments according to the present disclosure and is not intended to limit the scope of the present disclosure. Any equivalent configurational or flow changes made taking advantage of the specification and accompanying drawings of this disclosure, or any direct or indirect applications of this disclosure in other technical fields shall all be compassed within the scope of this disclosure.

## Claims

1. A method for cancelling an insurance policy, comprising:
detecting whether a preset cancellation condition of an insurance policy is satisfied when the insurance policy is under an insurance-applying status or under a to-be-underwritten status;
acquiring a corresponding cancellation period of the insurance policy when the preset cancellation condition of the insurance policy is satisfied;
detecting within the cancellation period whether a first change instruction is received which first change instruction is intended to change the status of the insurance policy so that the preset cancellation condition of the insurance policy is no longer satisfied; and
cancelling the insurance policy when the first change instruction is not detected.

2. The method of claim 1, further comprising, prior to cancelling the insurance policy when the first change instruction is not detected:
determining whether the insurance policy is set with a first warning period; and
sending a notification message to a terminal held by a policyholder within the first warning period when the insurance policy is set with the first warning period, in order to alert the policyholder of the danger that the insurance policy is likely to be cancelled.

3. The method of claim 2, further comprising, subsequent to determining whether the insurance policy is set with the first warning period:
determining whether an institution corresponding to the insurance policy is set with a second warning period when the insurance policy is set with no first warning period; and
sending a notification message to the terminal held by the policyholder within the second warning period when the corresponding institution of the insurance policy is set with the second warning period, in order to alert the policyholder of the danger that the insurance policy is likely to be cancelled.

4. The method of claim 1, wherein cancelling the insurance policy when the first change instruction is not detected comprises:
acquiring attribute information of the insurance policy when the first change instruction is not detected;
determining whether the insurance policy is provided with a grace period based on the attribute information;
detecting within the grace period, when the insurance policy is provided with the grace period, whether a second change instruction is received which second change instruction is intended to change the status of the insurance policy so that the preset cancellation condition of the insurance policy is no longer satisfied; and
cancelling the insurance policy when the second change instruction is not detected.

5. The method of claim 1, further comprising, subsequent to cancelling the insurance policy when the first change instruction is not detected:
sending a notification message that the insurance policy has been cancelled to a terminal held by a policyholder, in order to notify the policyholder that the insurance policy has been cancelled.

6. A device for cancelling an insurance policy, comprising:
a detection module, configured to detect whether a preset cancellation condition of an insurance policy is satisfied when the insurance policy is under an insurance-applying status or under a to-be-underwritten status;
an acquisition module, configured to acquire a corresponding cancellation period of the insurance policy when the preset cancellation condition of the insurance policy is satisfied, wherein the detection module is further configured to detect within the cancellation period whether a first change instruction is received which first change instruction is intended to change the status of the insurance policy so that the preset cancellation condition of the insurance policy is no longer satisfied; and
a cancellation module, configured to cancel the insurance policy when the first change instruction is not detected.

7. The device of claim 6, further comprising:
a determination module, configured to determine whether the insurance policy is set with a first warning period; and
a first transmission module, configured to send a notification message to a terminal held by a policyholder within the first warning period when the insurance policy is set with the first warning period, in order to alert the policyholder of the danger that the insurance policy is likely to be cancelled.

8. The device of claim 7, wherein the determination module is further configured to determine whether an institution corresponding to the insurance policy is set with a second warning period when the insurance policy is set with no first warning period; and
the first transmission module is further configured to send a notification message to the terminal held by the policyholder within the second warning period when the corresponding institution of the insurance policy is set with the second warning period, in order to alert the policyholder of the danger that the insurance policy is likely to cancelled.

9. The device of claim 6, wherein the cancellation module comprises:
an acquisition unit, configured to acquire attribute information of the insurance policy when the first change instruction is not detected;
a determination unit, configured to determine whether the insurance policy is provided with a grace period based on the attribute information;
a detection unit, configured to detect within the grace period, when the insurance policy is provided with the grace period, whether a second change instruction is received which second change instruction is intended to change the status of the insurance policy so that the preset cancellation condition of the insurance policy is no longer satisfied; and
a cancellation unit, configured to cancel the insurance policy when the second change instruction is not detected.

10. The device of claim 6, further comprising:
a second transmission module, configured to send a notification message that the insurance policy has been cancelled to a terminal held by a policyholder, in order to notify the policyholder that the insurance policy has been cancelled.

11. An insurance system, comprising a memory, a processor, and an insurance policy cancellation program that is stored in the memory and executable by the processor, wherein the processor is configured to invoke the insurance policy cancellation program stored in the memory to perform the following operations:
detecting whether a preset cancellation condition of an insurance policy is satisfied when the insurance policy is under an insurance-applying status or under a to-be-underwritten status;
acquiring a corresponding cancellation period of the insurance policy when the preset cancellation condition of the insurance policy is satisfied;
detecting within the cancellation period whether a first change instruction is received which first change instruction is intended to change the status of the insurance policy so that the preset cancellation condition of the insurance policy is no longer satisfied; and
cancelling the insurance policy when the first change instruction is not detected.

12. The insurance system of claim 11, wherein the processor is further configured to invoke the insurance policy cancellation program stored in the memory to perform the following operations prior to cancelling the insurance policy when the first change instruction is not detected:
determining whether the insurance policy is set with a first warning period; and
sending a notification message to a terminal held by a policyholder within the first warning period when the insurance policy is set with the first warning period, in order to alert the policyholder of the danger that the insurance policy is likely to be cancelled.

13. The insurance system of claim 12, wherein the processor is further configured to invoke the insurance policy cancellation program stored in the memory to perform the following operations subsequent to determining whether the insurance policy is set with the first warning period:
determining whether an institution corresponding to the insurance policy is set with a second warning period when the insurance policy is set with no first warning period; and
sending a notification message to the terminal held by the policyholder within the second warning period when the corresponding institution of the insurance policy is set with the second warning period, in order to alert the policyholder of the danger that the insurance policy is likely to be cancelled.

14. The insurance system of claim 11, wherein cancelling the insurance policy when the first change instruction is not detected comprises:
acquiring attribute information of the insurance policy when the first change instruction is not detected;
determining whether the insurance policy is provided with a grace period based on the attribute information;
detecting within the grace period, when the insurance policy is provided with the grace period, whether a second change instruction is received which second change instruction is intended to change the status of the insurance policy so that the preset cancellation condition of the insurance policy is no longer satisfied; and
cancelling the insurance policy when the second change instruction is not detected.

15. The insurance system of claim 11, wherein the processor is further configured to invoke the insurance policy cancellation program stored in the memory to perform the following operations subsequent to cancelling the insurance policy when the first change instruction is not detected:
sending a notification message that the insurance policy has been cancelled to a terminal held by a policyholder, in order to notify the policyholder that the insurance policy has been cancelled.

16. A computer-readable storage medium storing one or more programs executable by one or more processors to perform the following operations:
detecting whether a preset cancellation condition of an insurance policy is satisfied when the insurance policy is under an insurance-applying status or under a to-be-underwritten status;
acquiring a corresponding cancellation period of the insurance policy when the preset cancellation condition of the insurance policy is satisfied;
detecting within the cancellation period whether a first change instruction is received which first change instruction is intended to change the status of the insurance policy so that the preset cancellation condition of the insurance policy is no longer satisfied; and
cancelling the insurance policy when the first change instruction is not detected.

17. The computer-readable storage medium of claim 16, wherein the one or more programs are executable by the one or more processors to further perform the following operations prior to cancelling the insurance policy when the first change instruction is not detected:
determining whether the insurance policy is set with a first warning period; and
sending a notification message to a terminal held by a policyholder within the first warning period when the insurance policy is set with the first warning period, in order to alert the policyholder of the danger that the insurance policy is likely to be cancelled.

18. The computer-readable storage medium of claim 17, wherein the one or more programs are executable by the one or more processors to further perform the following operations subsequent to determining whether the insurance policy is set with the first warning period:
determining whether an institution corresponding to the insurance policy is set with a second warning period when the insurance policy is set with no first warning period; and
sending a notification message to the terminal held by the policyholder within the second warning period when the corresponding institution of the insurance policy is set with the second warning period, in order to alert the policyholder of the danger that the insurance policy is likely to be cancelled.

19. The computer-readable storage medium of claim 16, wherein cancelling the insurance policy when the first change instruction is not detected comprises:
acquiring attribute information of the insurance policy when the first change instruction is not detected;
determining whether the insurance policy is provided with a grace period based on the attribute information;
detecting within the grace period, when the insurance policy is provided with the grace period, whether a second change instruction is received which second change instruction is intended to change the status of the insurance policy so that the preset cancellation condition of the insurance policy is no longer satisfied; and
cancelling the insurance policy when the second change instruction is not detected.

20. The computer-readable storage medium of claim 16, wherein the one or more programs are executable by the one or more processors to further perform the following operations subsequent to cancelling the insurance policy if the first change instruction is not detected:
sending a notification message that the insurance policy has been cancelled to a terminal held by a policyholder, in order to notify the policyholder that the insurance policy has been cancelled.
